# EUROPEAN PATENT APPLICATION

(11) **EP 4 838 637 A1**
(43) Date of publication of application: **11.11.2026**
(21) Application number: 25188327.8
(22) Date of filing: 09.07.2025
(51) Int. Cl.: H01M 50/103, H01M 50/15, H01M 50/528, H01M 50/533, H01M 50/547

(54) **SECONDARY BATTERY AND MANUFACTURING METHOD THEREOF, ENERGY STORAGE SYSTEM, AND POWER UTILIZATION APPARATUS**

(30) Priority: 06.05.2025 CN 202510578922
(71) Applicant: Zhejiang Jinko Energy Storage Co., Ltd., Jiaxing, Zhejiang (CN)
(72) Inventor: ZENG, Xianrong, Haining, Zhejiang (CN); YANG, Zixiang, Haining, Zhejiang (CN); ZHANG, Luhua, Haining, Zhejiang (CN)
(74) Representative: Balder IP Law, S.L.

(57) **Abstract**

The present disclosure relates to the field of energy storage technologies, and provide a secondary battery, a method for manufacturing secondary batteries, an energy storage system, and a power utilization apparatus. The secondary battery includes a housing and a bare cell. The housing includes a first housing and a second housing configured to connect to the first housing. The first housing forms an accommodating cavity and has an opening communicated with the accommodating cavity, and the second housing is configured to seal the opening. The first housing includes a bottom wall and side walls connected to the bottom wall and connected to one another to form the accommodating cavity. A surface of the bottom wall facing the accommodating cavity has a surface area larger than a surface area of a surface of one respective side wall of the side walls facing the accommodating cavity. The second housing is provided with a negative post that is insulated from the second housing. The bare cell is arranged in the accommodating cavity and includes a positive pole piece, a negative pole piece, and a diaphragm configured to insulate the positive pole piece from the negative pole piece. The positive pole piece is provided with a positive tab, and the negative pole piece is provided with a negative tab. The secondary battery, the method for manufacturing secondary batteries, the energy storage system, and the power utilization apparatus provided in the present disclosure are conducive to improving the working performance of secondary batteries.

## Description

### TECHNICAL FIELD

The present disclosure relates to the field of energy storage technologies, and in particular to a secondary battery, a method for manufacturing secondary batteries, an energy storage system, and a power utilization apparatus.

### BACKGROUND

With the continuous development of new energy technologies, the demand for energy storage systems is also increasing. An energy storage system can effectively store electrical energy and output the electrical energy when needed. The energy storage system uses secondary batteries as energy storage units, which have good charge-discharge cycle characteristics and are suitable for forming widely applicable electrochemical energy storage systems.

As important elements of an energy storage system, secondary batteries are directly associated with performance of the energy storage system. In particular, as energy storage units of the energy storage system, the working performance of the secondary batteries determines the amount of electrical energy that the energy storage system can store and the charge-discharge efficiency. Therefore, how to design a structure of a secondary battery to improve its working performance is an important issue.

### SUMMARY

The embodiments of the present disclosure aim to provide a secondary battery, a method for manufacturing secondary batteries, an energy storage system, and a power utilization apparatus, which are conducive to improving the working performance of secondary batteries.

In order to address the above-mentioned technical problem, some embodiments of the present disclosure provide a secondary battery, including: a housing and a bare cell. The housing includes a first housing and a second housing configured to connect to the first housing. The first housing forms an accommodating cavity and has an opening communicated with the accommodating cavity, and the second housing is configured to seal the opening. The first housing includes a bottom wall and side walls connected to the bottom wall and connected to one another to form the accommodating cavity. A surface of the bottom wall facing the accommodating cavity has a surface area larger than a surface area of a surface of one respective side wall of the side walls facing the accommodating cavity. The second housing is provided with a negative post that is insulated from the second housing. The bare cell is arranged in the accommodating cavity and includes a positive pole piece, a negative pole piece, and a diaphragm configured to insulate the positive pole piece from the negative pole piece. The positive pole piece is provided with a positive tab, and the negative pole piece is provided with a negative tab. The bare cell includes a first surface facing the bottom wall, a second surface opposite to the first surface and facing the second housing, and a third surface connecting the first surface to the second surface. The positive tab extends from the third surface and is bent to allow a portion of the positive tab to extend along the first surface, and the negative tab extends from the third surface and is bent to allow a portion of the negative tab to extend along the second surface. The portion of the positive tab extending along the first surface is in electrical connection to the bottom wall, and the portion of the negative tab extending along the second surface is in electrical connection to the negative post.

Some embodiments of the present disclosure provide a method for manufacturing secondary batteries, including:
providing a housing including a first housing and a second housing configured to connect to the first housing, where the first housing forms an accommodating cavity and has an opening communicated with the accommodating cavity, the first housing includes a bottom wall and side walls connected to the bottom wall and connected to one another to form the accommodating cavity, a surface of the bottom wall facing the accommodating cavity has a surface area larger than a surface area of a surface of one respective side wall of the side walls facing the accommodating cavity, and the second housing is provided with a negative post that is insulated from the second housing;
manufacturing a bare cell including a first surface facing the bottom wall, a second surface opposite to the first surface and facing the second housing, and a third surface connecting the first surface to the second surface, including:
   bending a positive tab provided on the third surface to allow a portion of the positive tab to extend along the first surface; and
   bending a negative tab provided on the third surface to allow a portion of the negative tab to extend along the second surface;
arranging the bare cell in the accommodating cavity, where the portion of the positive tab extending along the first surface is in electrical connection to the bottom wall, and the portion of the negative tab extending along the second surface is in electrical connection to the negative post; and
engaging the second housing with the first housing to seal the opening with the second housing.

Some embodiments of the present disclosure provide an energy storage system, including: a cabinet having an inner cavity, and bare cells arranged in the inner cavity. Each bare cell of the bare cells includes a respective plurality of secondary batteries as illustrated above.

Some embodiments of the present disclosure provide a power utilization apparatus, including the energy storage system as illustrated above.

In the secondary battery, the method for manufacturing secondary batteries, the energy storage system, and the power utilization apparatus provided in the embodiments of the present disclosure, the packaging housing of the secondary battery is formed by the cooperation of the first housing and the second housing. The bottom wall of the first housing and the second housing are portions of the packaging housing that occupy relatively large spaces, and surfaces of the bare cell having relatively large areas face the bottom wall and the second housing, respectively. A portion of the positive tab of the bare cell that is bent and extends along the first surface is in electrical connection to the bottom wall, and a portion of the negative tab of the bare cell that is bent and extends along the second surface is in electrical connection to the negative post provided on the second housing. In this way, structure of the secondary battery can be simplified, and adverse effect on working performance of the secondary battery due to complex manufacturing processes can be reduced. Moreover, the number of connecting pieces connecting to tabs can be reduced, thereby effectively utilizing the arrangement space formed by engagement of different housings, increasing the capacity of the secondary battery, and improving working performance of the secondary battery.

### BRIEF DESCRIPTION OF THE DRAWINGS

Exemplary illustrations of one or more embodiments are provided by reference to pictures in the corresponding accompanying drawings. These exemplary illustrations do not constitute a limitation on the embodiments. Elements with the same reference numerals in the accompanying drawings represent similar elements. The drawings do not constitute a scale limitation unless otherwise specified.
FIG. 1 is a schematic diagram of a three-dimensional structure of a secondary battery provided in some embodiments of the present disclosure.
FIG. 2 is a schematic diagram of a three-dimensional structure, from another perspective, of the secondary battery provided in some embodiments of the present disclosure.
FIG. 3 is a schematic diagram of an explosive structure of the secondary battery provided in some embodiments of the present disclosure.
FIG. 4 is a schematic diagram of an explosive structure, from another perspective, of the secondary battery provided in some embodiments of the present disclosure.
FIG. 5 is a schematic diagram of a back structure of the secondary battery provided in some embodiments of the present disclosure.
FIG. 6 is a schematic diagram of a cross-sectional structure along A-A line in FIG. 5.
FIG. 7 is a schematic diagram of an enlarged structure at ellipse B in FIG. 6.
FIG. 8 is a schematic diagram of an enlarged structure at ellipse C in FIG. 6.
FIG. 9 is a schematic diagram of an internal structure of the secondary battery provided in some embodiments of the present disclosure.
FIG. 10 is a schematic diagram of a structure of the second housing of the secondary battery provided in some embodiments of the present disclosure.
FIG. 11 is a schematic diagram of a cross-sectional structure along D-D line in FIG. 10.
FIG. 12 is a schematic diagram of an enlarged structure at ellipse E in FIG. 11.
FIG. 13 is a schematic diagram showing cooperation of structures of the bare cell and the second insulation film in the secondary battery provided in some embodiments of the present disclosure.
FIG. 14 is a schematic diagram of an enlarged structure at ellipse F in FIG. 13.
FIG. 15 is a schematic diagram showing, from another perspective, cooperation of structures of the bare cell and the second insulation film in the secondary battery provided in some embodiments of the present disclosure.
FIG. 16 is a schematic diagram of an enlarged structure at ellipse G in FIG. 15.
FIG. 17 is a schematic diagram showing cooperation of structures of the bare cell and unfolded first insulation film in the secondary battery provided in some embodiments of the present disclosure.
FIG. 18 is a schematic diagram showing a structure that the bare cell is wrapped by the first insulation film in the secondary battery provided in some embodiments of the present disclosure.
FIG. 19 is a schematic diagram of a three-dimensional structure of a plastic component of the secondary battery provided in some embodiments of the present disclosure.
FIG. 20 is a schematic diagram of a three-dimensional structure, from another perspective, of the plastic component of the secondary battery provided in some embodiments of the present disclosure.
FIG. 21 is a schematic diagram showing the structure of the bare cell obtained by assembling secondary batteries provided in some embodiments of the present disclosure.
FIG. 22 is a flowchart of a method for manufacturing secondary batteries provided in some embodiments of the present disclosure.

### DETAILED DESCRIPTION OF THE EMBODIMENTS

To make the purpose, technical solutions, and advantages of the embodiments of the present disclosure clearer, various embodiments of the present disclosure will be described in detail below with reference to the accompanying drawings. However, those of ordinary skill in the art shall understand that in the embodiments of the present disclosure, many technical details are provided to enable readers to better understand the embodiments of the present disclosure. However, even without these technical details and various changes and modifications based on the following embodiments, the claimed technical solutions of the present disclosure can still be implemented. The division of the following embodiments is for the convenience of description and should not constitute any limitation on the implementation of the present disclosure. The embodiments can be combined and referenced with each other without contradiction.

Unless otherwise specified, all technical and scientific terms used in the present disclosure have the same meanings as those commonly understood by those skilled in the art. The terms used in the present disclosure are only for the purpose of describing embodiments and are not intended to limit the scope of the present disclosure. The terms "including" and "having" as well as any variations thereof in the description, claims, and the above description of the drawings of the present disclosure indicate non-exclusive inclusion.

In the illustration of the embodiments of the present disclosure, unless otherwise specified and limited, technical terms such as "installation", "engagement", "connection", or the like should be broadly understood. For example, "connection" may refer to fixed connections, detachable connections, integrated as a whole, mechanical connections or electrical connections, direct connections or indirect connections through an intermediate medium, or internal connections between two components or an interaction relationship between two components. For those skilled in the art, the specific meanings of the above terms in the embodiments of the present disclosure can be understood according to the specific situations.

As the sources of energy become increasingly diverse, the importance of energy storage is also growing. The electrochemical energy storage system formed by secondary batteries is a widely used energy storage system, such as the energy storage system formed by lithium batteries that can be seen everywhere in industrial production and daily life. Lithium batteries have been widely used due to their high energy density, long single cell cycle period, high efficiency, cleanliness, and pollution-free characteristics. Especially square lithium batteries, they have relatively high structural strength as well as relatively high energy density. Moreover, square lithium batteries have a relatively simple structure and are relatively easy to expand, making them an important option for improving energy density by increasing the capacity of individual batteries.

At present, in a secondary battery, a square packaging housing is generally formed by engagement of a bottom housing with a top cover, and the top cover is mounted on the top of the bare cell. The positive tab and the negative tab of the bare cell are folded and are welded to positive and negative connecting pieces at the top of bare cells, and then are welded to the top cover. Structures such as positive and negative posts, explosion-proof valves, and the like are provided on the top cover. In the production and assembly process of square secondary batteries, it is necessary to weld the positive and negative tabs of the bare cell to the positive and negative posts on the top cover, respectively, and then weld the top cover to the housing. This design requires a lot of connecting pieces and welding operations, and the posts and connecting pieces welded together will occupy a certain amount of space due to their heights, resulting in a complex structure and high manufacturing difficulty of secondary batteries. Welding connecting pieces on the protruding tabs of the bare cell for circuit connection may also lead to incomplete weld, affecting the welding quality and subsequent usage stability. Moreover, an excessive number of connecting pieces also results in increased material costs and occupation of space, which is not conducive to improving the capacity of individual batteries.

In order to improve working performance of the secondary battery, some embodiments of the present disclosure provide a secondary battery. In the secondary battery, a side of the packaging housing having a relatively large surface area functions as the entrance for the bare cell, and portions of tabs of the bare cell are bent onto the lateral surfaces of bare cells having relatively large areas. The positive tab of the bare cell may be directly welded to the housing, such that the housing functions as the positive-pole structure of the secondary battery and carrying positive charges. A negative post may be provided on the top cover and is welded with the negative tab of the bare cell. In this way, structure of the secondary battery can be simplified, and adverse effect on working performance of the secondary battery due to complex manufacturing processes can be reduced. Moreover, the arrangement space inside the packaging housing can be effectively utilized, and the capacity of the secondary battery can be increased, thereby improving working performance of the secondary battery.

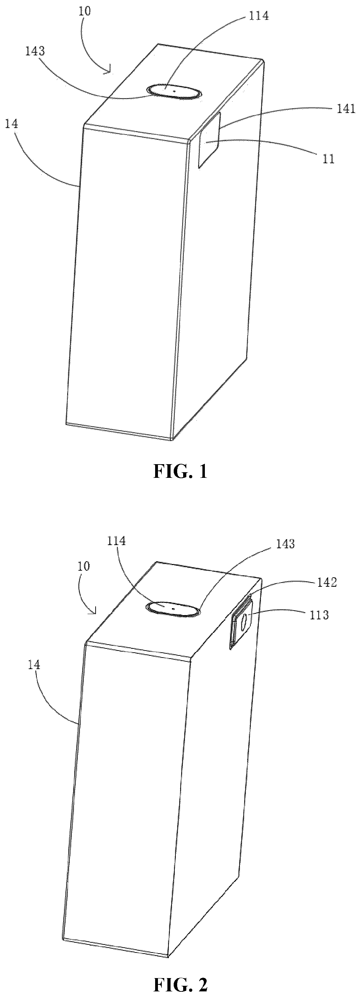

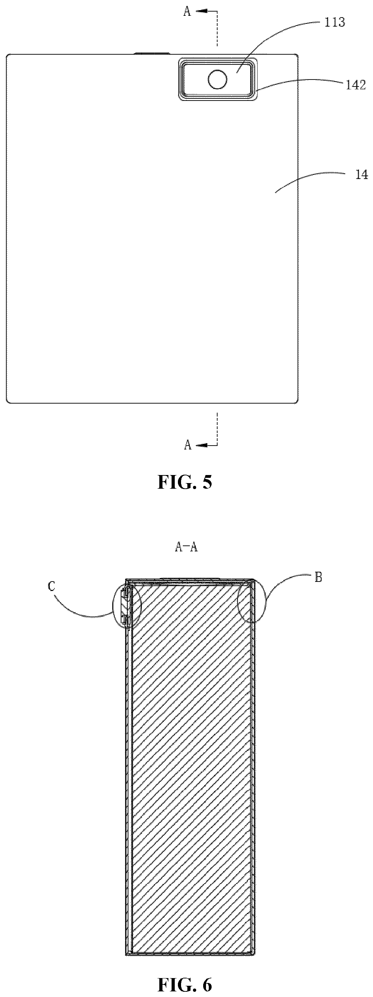

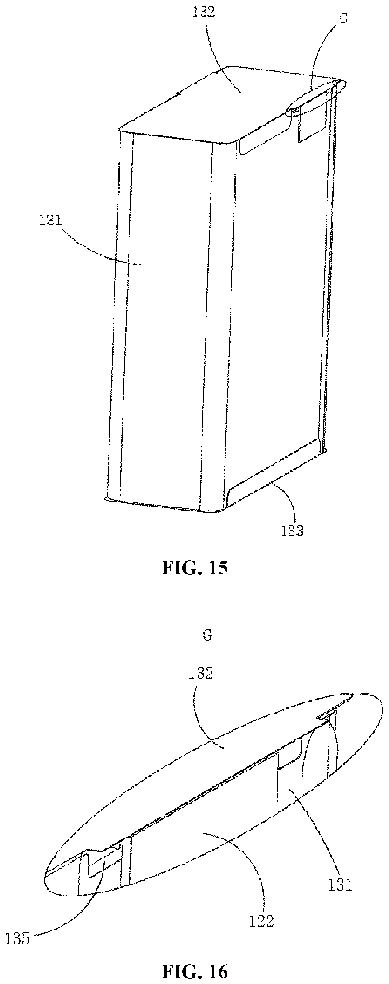

The structure of the secondary battery provided in some embodiments of the present disclosure will be illustrated below with reference to FIGS. 1 to 21.

As shown in FIGS. 1 to 21, the secondary battery 10 provided in some embodiments of the present disclosure includes a housing 11 and a bare cell 12. The housing 11 includes a first housing 111 and a second housing 112 configured to connect to the first housing. The first housing 111 forms an accommodating cavity 101 and has an opening 102 communicated with the accommodating cavity 101, and the second housing 112 is configured to seal the opening 102. The first housing 111 includes a bottom wall 1111 and side walls 1112 connected to the bottom wall 1111 and connected to one another to form the accommodating cavity 101. A surface of the bottom wall 1111 facing the accommodating cavity 101 has a surface area larger than a surface area of a surface of one respective side wall of the side walls 1112 facing the accommodating cavity 101. The second housing 112 is provided with a negative post 113 that is insulated from the second housing 112.

The bare cell 12 is arranged in the accommodating cavity 101 and includes a positive pole piece, a negative pole piece, and a diaphragm configured to insulate the positive pole piece from the negative pole piece. The positive pole piece is provided with a positive tab 121, and the negative pole piece is provided with a negative tab 122. The bare cell 12 includes a first surface 123 facing the bottom wall 1111, a second surface 124 opposite to the first surface and facing the second housing 112, and a third surface 125 connecting the first surface 123 to the second surface 124. The positive tab 121 extends from the third surface 125 and is bent to allow a portion of the positive tab to extend along the first surface 123, and the negative tab 122 extends from the third surface 125 and is bent to allow a portion of the negative tab to extend along the second surface 124. The portion of the positive tab 121 extending along the first surface 123 is in electrical connection to the bottom wall 1111, and the portion of the negative tab 122 extending along the second surface 124 is in electrical connection to the negative post 113.

The housing 11 forms the packaging part of the secondary battery 10, which can provide arrangement space for the bare cell 12. Moreover, the housing 11 has relatively high mechanical strength, which can provide protection for the components arranged inside. The housing 11 includes the first housing 111 that provides arrangement space and the second housing 112 configured to cooperate with the first housing 111. The first housing 111 and the second housing 112 are connected to form a square housing of the secondary battery 10. In FIGS. 1 to 4, four side walls 1112 connected to the bottom wall 1111 of the first housing 111 enclose the accommodating cavity 101 having the opening 102 on one side. In practice, the number of the side walls 1112 of the first housing 111 may be less than four or more than four, thereby forming a square-like housing. Alternatively, the internal space of the first housing 111 may be divided into a plurality of accommodating cavities 101 using some side walls 1112. The first housing 111 and the second housing 112 may be made of aluminum.

The accommodating cavity 101 of the first housing 111 is formed by various parts, and the bottom wall 1111 is the part of the first housing 111 that occupies a relatively large space. The bottom wall 1111 and the second housing 112 form two sides of the packaging housing that occupy relatively large spaces. The side walls 1112 are connected in an enclosed manner on the bottom wall 1111, forming a square contour. The surface of the bottom wall 1111 and the surface of the second housing 112 far away from each other form the two surfaces of the packaging housing of the secondary battery 10 having relatively large areas, and the surfaces of the side walls 1112 far away from the accommodating cavity 101 form the surfaces of the packaging housing of the secondary battery 10 having relatively small areas.

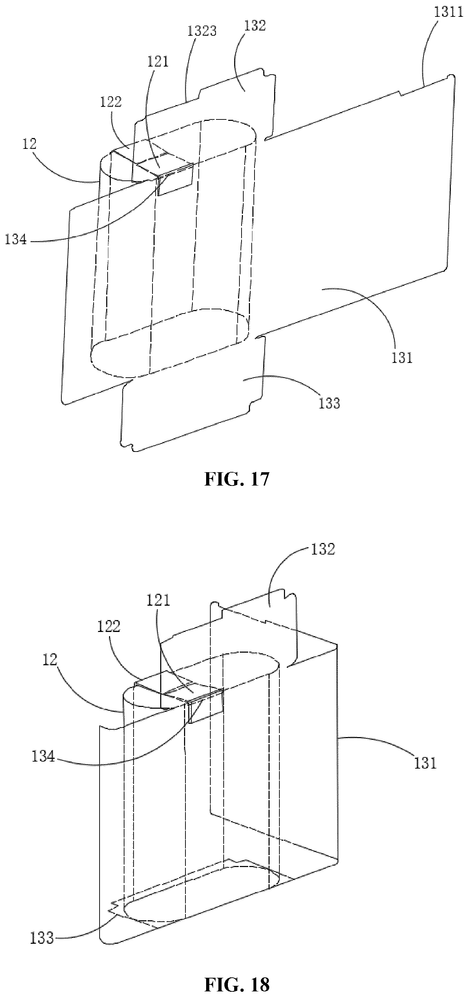

The bare cell 12 is the part of the secondary battery 10 that cooperates with the electrolyte to achieve electrochemical energy storage. During the charging and discharging process of the secondary battery 10, lithium ions move between the positive and negative pole pieces. In the bare cell 12, bare cells are formed using pole pieces and diaphragms and using a winding process, or are formed using a lamination process. The formed bare cells are assembled into the bare cell 12. For example, the bare cells shown in FIGS. 17 and 18 are formed using a coiled structure.

In a bare cell, the positive tab 121 is led out from the positive pole piece, and the negative tab 122 is led out from the negative pole piece. The first surface 123 and the second surface 124 are the two lateral surfaces of the bare cell having relatively large areas, and the third surface 125 is the surface where the tabs of the bare cell are led out and is the top surface of the bare cell. The positive tab 121 led out from the third surface 125 is bent to extend along the first surface 123, and the negative tab 122 is bent to extend along the second surface 124, so as to provide favorable conditions for the connection between the bare cell and the housings. In practice, there may be a gap or not between the positive tab 121 and the first surface 123 of the bare cell, and there may be a gap or not between the negative tab 122 and the second surface 124 of the bare cell.

In the secondary battery 10 provided in the embodiments of the present disclosure, the packaging housing of the secondary battery 10 is formed by the cooperation of the first housing 111 and the second housing 112. The bottom wall 1111 of the first housing 111 and the second housing 112 are portions of the packaging housing that occupy relatively large spaces, and surfaces of the bare cell 12 having relatively large areas face the bottom wall 1111 and the second housing 112, respectively. A portion of the positive tab 121 of the bare cell 12 that is bent and extends along the first surface 123 is in electrical connection to the bottom wall 1111, and a portion of the negative tab 122 of the bare cell 12 that is bent and extends along the second surface 124 is in electrical connection to the negative post 113 provided on the second housing 112. In this way, structure of the secondary battery 10 can be simplified, and adverse effect on working performance of the secondary battery 10 due to complex manufacturing processes can be reduced. Moreover, the number of connecting pieces connecting to tabs can be reduced, thereby effectively utilizing the arrangement space formed by engagement of different housings, increasing the capacity of the secondary battery 10, and improving working performance of the secondary battery 10.

In some embodiments, the secondary battery 10 may further include a first insulation film 13. The first insulation film 13 includes a first extension portion 132 configured to cover the third surface 125, a second extension portion 133 configured to cover a fourth surface of the bare cell 12 opposite to the third surface 125, and a main body 131 configured to cover remaining surfaces of the bare cell 12.

The first insulation film 13 is the part that wraps around the bare cell 12, which can effectively seal and protect the bare cell and isolate the bare cell from the housing 11. The first insulation film 13 is arranged on the outside of the bare cell 12. The main body 131 is the part that wraps around the bare cell and covers four lateral surfaces of the bare cell, and the first extension portion 132 and the second extension portion 133 are the parts that wrap the two end surfaces of the bare cell. With the cooperation of different parts, the bare cell 12 can be effectively wrapped. In practice, the first insulation film 13 may be made of polyester film, such as Mylar film. By using a Mylar film that fully wraps the bare cell, the safety performance inside the secondary battery 10 can be improved. Moreover, the Mylar film can be formed into an integrated structure by performing melt welding on laminates, thereby accommodating the bare cell inside. The Mylar film may not be welded to the plastic component, which is the component located under the top cover of the secondary battery that insulate tab connection structures and the bare cell 12 from the top cover of the packaging housing, also known as lower plastic. After changing the structure of the housing 11, the plastic component 15 no longer cooperates with the top cover, but plays an insulating role between the tab connection structures, the bare cell 12, and the side walls 1112 of the first housing 111. Moreover, the plastic component 15 is used to prevent undesired movement of the bare cell 12 inside the first housing 111.

A first hollow area 134 and a second hollow area 135 are defined on the first insulation film 13 that wraps the bare cell. The first hollow area 134 is oriented towards the first surface 123 of the bare cell and exposes a portion of the positive tab 121. The second hollow area 135 is oriented towards the second surface 124 of the bare cell and exposes a portion of the negative tab 122. The first hollow area 134 is used to provide a clearance channel for the connection between the positive tab 121 and the bottom wall 1111, and the second hollow area 135 is used to provide a clearance channel for the connection between the negative tab 122 and the second housing 112.

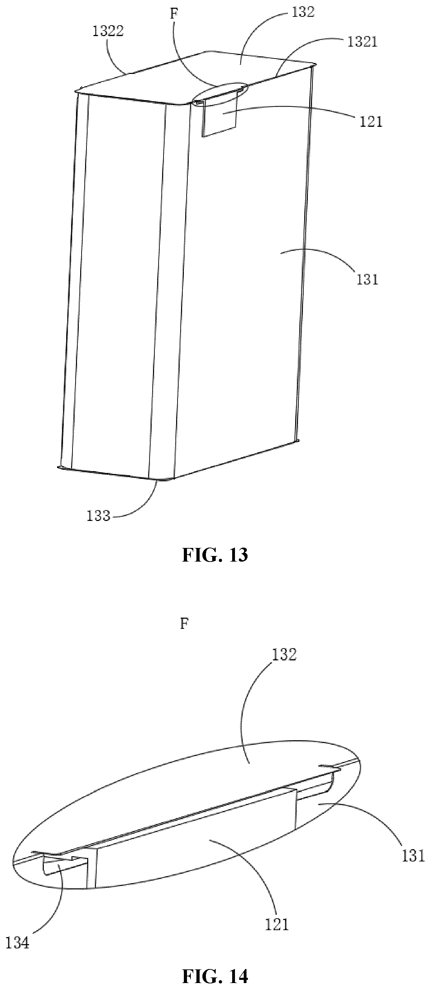

As shown in FIGS. 13 to 16, the first extension portion 132 may include a first border area 1321 and a second border area 1322 opposite to the first border area. The first extension portion is connected to the main body 131 at the first border area 1321, the first hollow area 134 configured for the positive tab 121 to pass through is defined in the first border area 1321, and the second hollow area 135 configured for the negative tab 122 to pass through is defined in the second border area 1322.

The first border area 1321 and the second border area 1322 of the first extension portion 132 have relatively large lengths and correspond to two edges of a top portion of the bare cell in a thickness direction, respectively. The first border area 1321 is integrated with the main body 131, and a clearance is defined in the first border area 1321. A position of the clearance corresponds to the portion of the positive tab 121 that is bent and extends along the first surface 123, thereby forming the first hollow area 134 that exposes the portion of the positive tab 121. The portion of the positive tab 121 extending along the first surface 123 may pass through the first hollow area 134 and be located on a side of the first insulation film 13 away from the bare cell 12.

After the first extension portion 132 is folded to cover the top surface of the bare cell, the second border area 1322 is oriented towards the main body 131, and a clearance is defined in the second border area 1322. A position of the clearance corresponds to the portion of the negative tab 122 that is bent and extends along the second surface 124, thereby forming the second hollow area 135 that exposes the portion of the negative tab 122. The portion of the negative tab 122 extending along the second surface 124 may pass through the second hollow area 135 and be located on a side of the first insulation film 13 away from the bare cell 12.

Moreover, a portion of the second border area 1322 is bent to cover and be fixed on a side of the main body 131 away from the second surface 124, and a portion of a border area of the second extension portion 133 is bent to cover and be fixed on the side of the main body 131 away from the second surface 124.

After being folded to cover the end surfaces of the bare cell, the first extension portion 132 and the second extension portion 133 may be connected to the main body 131. Two end edge of the main body 131 may also be overlapped with each other and fixed to each other by melting after the main body 131 surrounding the bare cell 12 for a circle, thereby stabilizing the wrapping shape of the first insulation film 13 on the outside of the bare cell. A portion of the second border area 1322 of the first extension portion 132 is bent towards the second surface 124 of the bare cell, in order to cover on the side of the main body 131 away from the second surface 124 and form overlapped portion between the first extension portion 132 and the main body 131. The portion of the second border area 1322 of the first extension portion 132 may be fixed to the main body 131 using melting or adhesive bonding.

A portion of a border area of the second extension portion 133 is also bent towards the second surface 124 of the bare cell, in order to cover on the side of the main body 131 away from the second surface 124 and form overlapped portion between the second extension portion 133 and the main body 131. The portion of the border area of the second extension portion 133 may be fixed to the main body 131 using melting or adhesive bonding.

FIG. 17 is a schematic diagram showing cooperation of structures of the bare cell 12 and unfolded first insulation film 13. FIG. 18 is a schematic diagram showing cooperation of structures of the bare cell 12 and partially folded first insulation film 13. As shown in FIG. 17, the first hollow area 134 configured to provide a clearance for the positive tab 121 is defined at the folding boundary between the main body 131 and the first extension portion 132 and is located to correspond to an edge of the top portion of the bare cell 12. Moreover, a first notch 1311 is defined at an edge of the main body 131 away from the folding boundary, and a second notch 1323 is defined in the second border area 1322 of the first extension portion 132. After folding of the first insulation film 13, the first notch 1311 and the second notch 1323 are in correspondence in position, thereby forming the second hollow area 135 configured to provide a clearance for the negative tab 122.

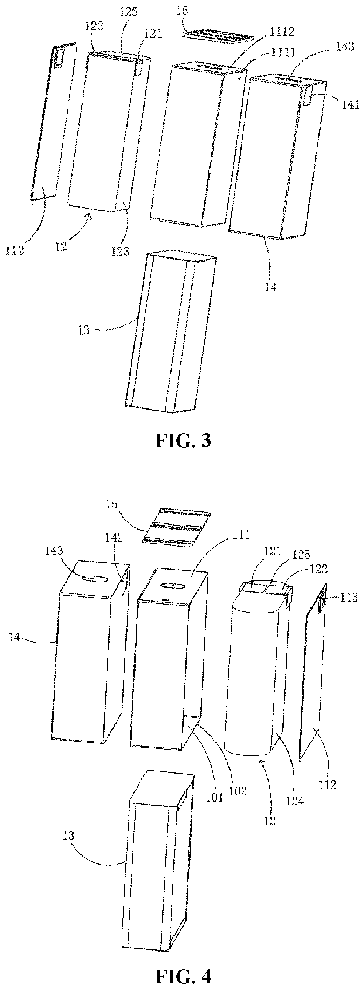

As shown in FIGS. 3 and 4, the secondary battery may further include a second insulation film 14 configured to wrap the housing 11 inside. A first through hole 141 facing the bottom wall 1111 and a second through hole 142 facing the second housing 112 are defined on the second insulation film 14, a portion of the bottom wall 1111 is exposed from the first through hole, and the negative post 113 is exposed from the second through hole.

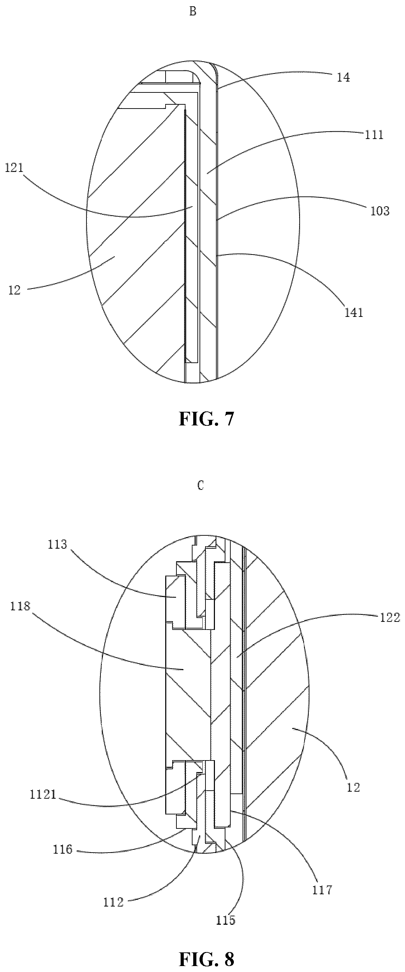

The second insulation film 14 is a protective film for the surfaces of the housing 11, which may serve as an insulation material between the secondary batteries 10, providing good protection for the secondary batteries 10 and blocking the adverse effects of various malfunctions of a single secondary battery 10 on other secondary batteries 10. The second insulation film 14 may be made of polyester film, such as PET blue film. In practice, by wrapping a blue film on the outside of the housing 11 and reserving the positive electrode welding position 103 shown in FIG. 7 using a hollow area corresponding to the bottom wall 1111 on the blue film, the reserved positive electrode welding position 103 can be used to replace a positive post and form the positive electrode structure of the secondary battery 10. The secondary battery may be connected to the positive or negative electrode structure of other secondary batteries 10 through the positive electrode welding position 103. For example, when multiple secondary batteries 10 are connected in series, the negative post 113 of one secondary battery 10 may come in contact with the positive electrode welding position 103 of another secondary battery 10, and then a connection may be formed using laser welding. In this way, the series assembly of the multiple secondary batteries 10 can be achieved.

In order to expose the positive and negative electrodes of the secondary battery 10 and facilitate connecting the secondary battery 10 outside, the second insulation film 14 also has through holes configured to expose the positive and negative electrode structures when wrapping the housing 11. The first through hole 141 corresponds to the positive electrode structure, and the second through hole 142 corresponds to the negative electrode structure. The first through hole 141 is oriented towards the bottom wall 1111, and the portion of the bottom wall 1111 that exposes from the first through hole 141 forms the positive electrode structure of the secondary battery 10. The second through hole 142 is oriented towards the second housing 112, and the negative post 113 on the second housing 112 exposes from the second through hole 142 and forms the negative electrode structure of the secondary battery 10.

In some embodiments, the negative post 113 may be arranged adjacent to an edge of the second housing 112, and the first through hole 141 is coaxial with the second through hole 142.

That is, the negative post 113 is arranged near the edge of the second housing 112. When multiple secondary batteries 10 are arranged in sequence to form a battery module, the negative post 113 of one secondary battery 10 may be connected to the portion of the bottom wall 1111 of a subsequent secondary battery 10 that exposes from the second insulation film 14. Arranging the negative post 113 adjacent to the edge of the second housing 112 can facilitate formation of the connection between the negative post 113 of a secondary battery 10 and the bottom wall 1111 of an adjacent secondary battery 10 forming the positive electrode structure.

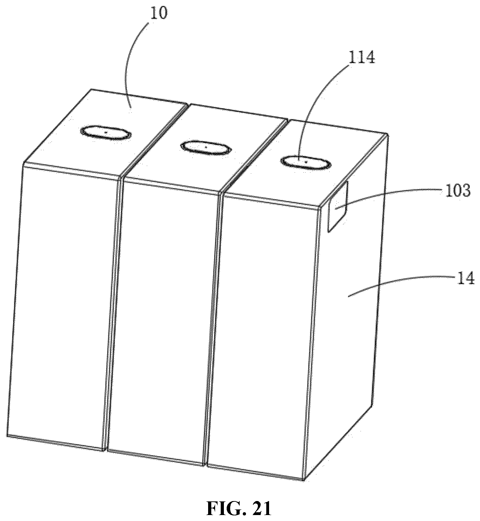

Moreover, the first through hole 141 and the second through hole 142 on the second insulation film 14 are coaxially arranged, and there is a positional correspondence between them. When connecting two secondary batteries 10 in series, the coaxial arrangement can facilitate alignment of positions of the two secondary batteries 10 on the same plane. When placing multiple secondary batteries 10 in a regular manner, the coaxial arrangement can ensure that the negative post 113 of one secondary battery 10 is aligned with the portion of the bottom wall 1111 of an adjacent secondary battery 10 that exposes from the second insulation film 14, thereby facilitating connecting the multiple secondary batteries 10 in series to form the battery module. As shown in FIG. 21, multiple secondary batteries 10 may be arranged in sequence along the same direction. The positive electrode welding position 103 formed by the portion of the bottom wall 1111 of a secondary battery 10 exposed from the first through hole 141 may be welded with the negative post 113 of a subsequent secondary battery 10 exposed from the second through hole 142, thereby forming a series connected battery module.

In practice, a distance between the negative post 113 and the edge of the second housing 112 may be in a range of 10 millimeters to 20 millimeters. The negative post 113 may be arranged in a region from 90% to 95% of the height of the second housing 112.

Moreover, a side wall of the side walls 1112 is provided with an explosion-proof valve 114, a third through hole 143 facing the explosion-proof valve is defined on the second insulation film 14, and the explosion-proof valve 114 is exposed from the third through hole 143.

The explosion-proof valve 114 may be formed by a thinning area in thickness on the side wall 1112, or by scoring on the side wall 1112, or by connecting an explosion-proof plate on the side wall 1112. The explosion-proof valve 114 can timely release the pressure inside the housing 11 to provide protection for the secondary battery 10. The explosion-proof valve 114 is arranged on the side wall 1112 of the first housing 111. When secondary batteries 10 are assembled to form a battery module, the side wall 1112 faces the outside of the battery module. It can be ensured that the explosion-proof valve 114 will not be obstructed by adjacent secondary batteries 10.

The third through hole 143 defined on the second insulation film 14 can expose the explosion-proof valve 114. The third through hole 143 is oriented towards the side wall 1112, thereby preventing the adverse effect on the normal protective function of the explosion-proof valve 114.

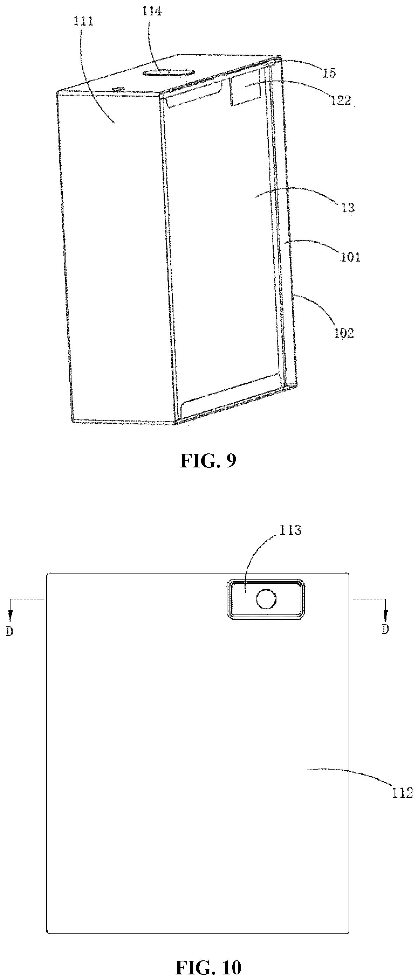

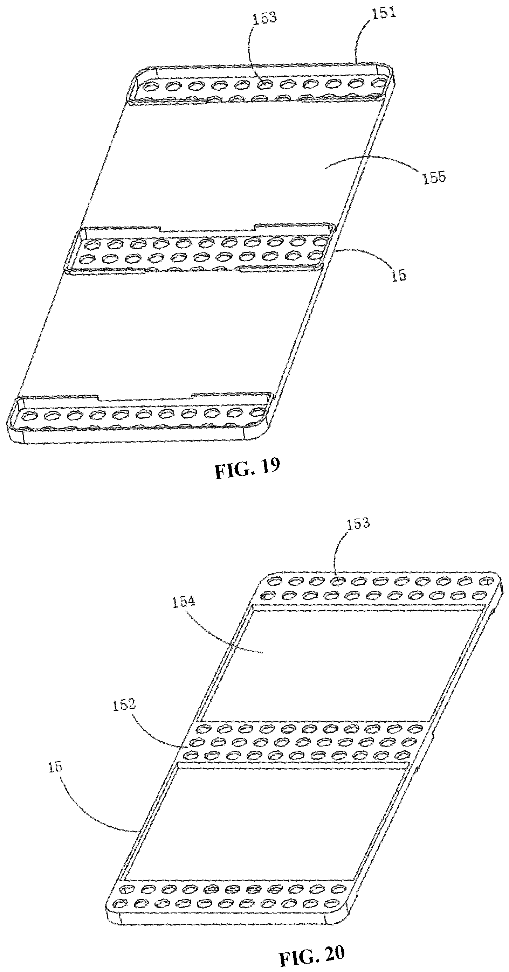

As shown in FIG. 9, the secondary battery 10 may further include a plastic component 15 arranged in the accommodating cavity 101. As shown in FIGS. 19 and 20, the plastic component 15 includes a first contact surface 151 configured to contact with the housing 11 and a second contact surface 152 opposite to the first contact surface and configured to contact with the bare cell 12.

The plastic component 15 is arranged in the housing 11 and is in contact with the housing 11 and the bare cell 12, respectively. In this way, the plastic component 15 can limit the position of the bare cell 12 within the accommodating cavity 101 of the housing 11 and prevent undesired movement of the bare cell 12 inside the accommodating cavity 101. In this way, the bare cell can be fixed within the housing 11, thereby ensuring the stability of the secondary battery 10 during use.

As shown in FIGS. 19 and 20, via holes 153 may be defined on the plastic component 15 to allow electrolyte to pass through. Moreover, a groove 154 and a clamping groove 155 may be respectively defined on both sides of the plastic component 15. The groove 154 defined on the second contact surface 152 can provide accommodation space for the positive tab 121 and the negative tab 122, preventing adverse effects such as mechanical damage on the tabs. The clamping groove 155 can facilitate the tooling to clamp the plastic component 15, and then dispose the plastic component 15 into the accommodating cavity 101 of the housing 11.

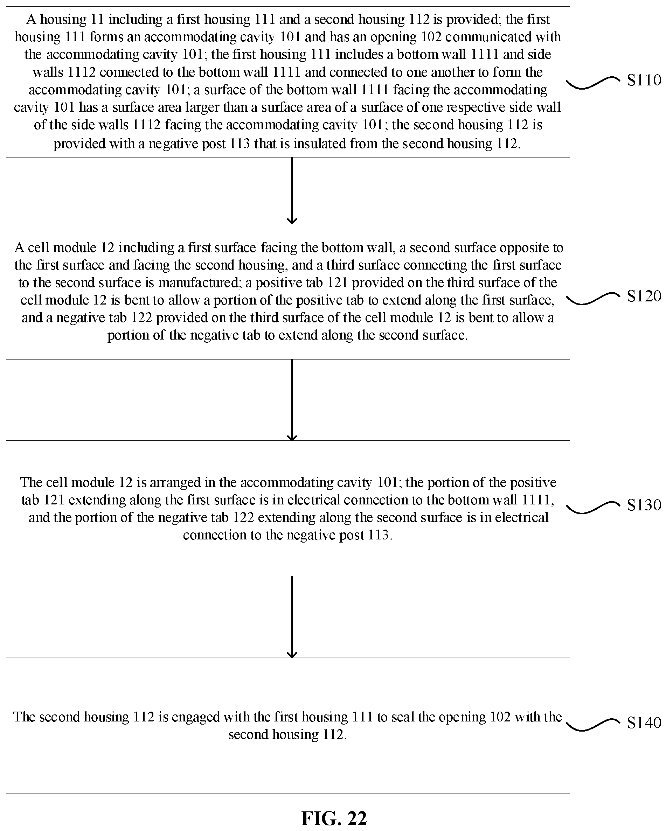

Some embodiments of the present disclosure provide a method for manufacturing secondary batteries 10. As shown in FIG. 22, the method includes operations as follows.

At S110, a housing 11 is provided. The housing 11 includes a first housing 111 and a second housing 112. The first housing 111 forms an accommodating cavity 101 and has an opening 102 communicated with the accommodating cavity 101. The first housing 111 includes a bottom wall 1111 and side walls 1112 connected to the bottom wall 1111 and connected to one another to form the accommodating cavity 101. A surface of the bottom wall 1111 facing the accommodating cavity 101 has a surface area larger than a surface area of a surface of one respective side wall of the side walls 1112 facing the accommodating cavity 101. The second housing 112 is provided with a negative post 113 that is insulated from the second housing 112.

The housing 11 is the foundation for mounting other components of the secondary battery 10. Compared to the housing 11 formed by the combination of a bottom housing and a top cover, in some embodiments of the present disclosure, the housing 11 is formed by the combination of a side housing and a side cover. In related technologies, the bottom housing provides the two surfaces of the square packaging housing of the secondary battery 10 having relatively large areas. However, the bottom housing has a relatively large stretching length, and the depth inside the bottom housing is also relatively large, which is not conducive to saving material costs and is not conducive to mounting the bare cell 12.

The first housing 111 forming the side housing has a stretching height that is previously equal to the height of the bare cell 12 and now is equal to the thickness of the bare cell 12, thereby reducing the difficulty and accordingly lowering the overall mold production cost and the maintenance cost. Due to the relatively small stretching length of the side housing, the side housing may be manufactured by stretching using relatively thin aluminum material, which can save material costs and increase the internal space of the housing 11. Moreover, the depth of the accommodating cavity 101 inside the side housing is relatively small, which can facilitate the arrangement of the bare cell 12. The two walls of the housing 11 that occupy a relatively large space are respectively formed in the first housing 111 and the second housing 112. The first housing 111 can directly form the positive electrode structure of the secondary battery 10, and the second housing 112 may be provided with the negative post 113 to form the negative electrode structure of the secondary battery 10. The positive and negative electrode structures are arranged on the two surfaces of the packaging housing having relatively large areas, with the positive and negative tabs being bent towards the outside of the bare cell. The first housing 111 may have a relatively small stretching length in the direction of the opening 102. Structures such as a welding hole for the explosion-proof valve 114, an injection hole, or the like may be defined on a side wall 1112 of the first housing 111. The second housing 112, as the cover portion, may be equipped with a riveting structure to engage with the first housing 111.

In practice, by changing the construction form of the housing 11, the post at the top of the secondary battery 10 can be eliminated. Due to the change in the stretching direction of the housing of the secondary battery 10 from the height direction to the width direction, the thickness of the aluminum housing in the height direction of the secondary battery 10 can be reduced to about 80% of the original thickness. Moreover, after removing the post structure at the top surface of the bare cell 12, the thickness of the plastic component can be reduced by 60%, which, in combination with the reduction of the thickness of the aluminum housing to 80%, can totally increase the height of the bare cell of a single battery by about 2% to 5%. Compared with the secondary batteries of the same dimension in the related technologies, the secondary battery 10 provided in some embodiments of the present disclosure has a capacity increased by about 2% to 5% and an energy density increased by about 2% to 5%. For example, in the related technologies, the thickness of the plastic component in the secondary battery is in a range of 4.5mm to 5.5mm, the thickness of the aluminum housing in the height direction of the secondary battery is in a range of 1mm to 2mm, the height of the bare cell is in a range of 185mm to 205mm, and the capacity of the secondary battery is in a range of 270Ah to 290Ah. With the structure of the secondary battery 10 provided in some embodiments of the present disclosure, the thickness of the plastic component 15 may be in a range of 2.7mm to 3.3mm, the thickness of the aluminum housing in the height direction of the secondary battery 10 may be in a range of 0.8mm to 1.6mm, the height of the bare cell may be in a range of 188mm to 215mm, and the capacity of the secondary battery 10 may be in a range of 275Ah to 350Ah.

At S120, a bare cell 12 including a first surface facing the bottom wall, a second surface opposite to the first surface and facing the second housing, and a third surface connecting the first surface to the second surface is manufactured. A positive tab 121 provided on the third surface of the bare cell 12 is bent to allow a portion of the positive tab to extend along the first surface, and a negative tab 122 provided on the third surface of the bare cell 12 is bent to allow a portion of the negative tab to extend along the second surface.

The bare cell 12 is formed by the positive pole piece, the negative pole piece, and the diaphragm using a winding process or a lamination process. The positive tab 121 is led out from the positive pole piece, and the negative tab 122 is led out from the negative pole piece. The positive tab 121 extends from the third surface of the bare cell and is bent to allow a portion of the positive tab to extend along the first surface, and the negative tab 122 extends from the third surface of the bare cell and is bent to allow a portion of the negative tab to extend along the second surface. The first surface and the second surface are two surfaces of the bare cell having relatively large areas. By bending the positive and negative tabs, the connection positions for the positive and negative tabs can be transferred from the top surface of the bare cell to the two lateral surfaces having relatively large areas, thereby forming the positive and negative electrode structures on the two surfaces of the secondary battery 10 having relatively large areas.

At S130, the bare cell 12 is arranged in the accommodating cavity 101. The portion of the positive tab 121 extending along the first surface is in electrical connection to the bottom wall 1111, and the portion of the negative tab 122 extending along the second surface is in electrical connection to the negative post 113.

After both the bare cell 12 and the housing 11 are completed, the bare cell 12 may be arranged into the accommodating cavity 101 of the first housing 111. During arranging the bare cell 12, the first surface of the bare cell is oriented towards the bottom wall 1111, and after arranging the bare cell 12, the positive tab 121 is electrically connected to the bottom wall 1111. The negative tab 122 is electrically connected to the negative post 113 on the second housing 112. As a result, the positive post and the positive and negative electrode connecting pieces of the secondary battery 10 can be eliminated, which can reduce the number of parts and costs. By directly welding the positive tab 121 to the bottom wall 1111 of the first housing 111, the first housing 111 can carry positive charges in addition to omitting the positive post.

It is noted that in the related technologies, a tab connection structure is generally formed by connecting pieces and a tab using butterfly welding. The connecting pieces will occupy the internal space of the housing 11, and the addition of the connecting pieces will increase the cost of parts. Moreover, the tabs are folded on the top surface of the bare cell, requiring a large folding space and reducing the overall space utilization efficiency. By changing the tab connection structure, the cost of the secondary battery 10 can be reduced. In practice, after disposing the bare cell 12, the plastic component 15 may be disposed. The position of the bare cell 12 inside the housing 11 can be limited by the plastic component 15. After the change of the tab connection form, the height of the plastic component 15 can be reduced to about 60% of an original height.

There may be multiple bare cells 12, that is, multiple bare cells may be encapsulated in the housing 11, and the multiple bare cells may be connected in series, thereby increasing the voltage of the secondary battery 10 and reducing the number of the secondary batteries 10 required to reach the required voltage after forming a module. For example, currently the voltage of a secondary battery 10 is about 3.5V, and a relatively large number of secondary batteries 10 in series required for the battery module to reach the design voltage value. After connecting two bare cells in series inside the housing 11, the voltage of the secondary battery 10 increases from 3.35V to 6.7V, which raises the platform voltage of the secondary battery 10, and the required number of secondary batteries 10 in a same battery module for reaching a required voltage is halved.

At S140, the second housing 112 is engaged with the first housing 111 to seal the opening 102 with the second housing 112.

After the connection of the bare cell 12 with the housings, the first housing 111 may be engaged with the second housing 112, such that the opening 102 of the first housing 111 is sealed by the second housing 112. The connection between the first housing 111 and the second housing 112 may be achieved by welding. A stopper notch may be defined at an edge of the second housing 112 for positioning, in order to ensure the connection accuracy between the second housing 112 and the first housing 111. In practice, after connecting the negative tab 122 to the negative post 113, the second housing 112 and the first housing 111 may be welded together at peripheries to form a whole by engaging the two housings.

Before the operation S110, the method further includes the operations as follows.

At S101, a post hole 1121 is defined on the second housing 112.

The post hole 1121 is defined on the second housing 112 for the connection to the negative post 113. The second housing 112, as a cover part having a relatively large area, has sufficient space for arranging the negative post 113. In practice, the post hole 1121 may be defined adjacent to an edge of the second housing 112, so that the installation position of the negative post 113 is close to the edge of the second housing 112, facilitating the subsequent connection in series of multiple secondary batteries 10.

At S102, a first insulation component 115 and a second insulation component 116 are provided on both sides of the post hole 1121, respectively.

The first insulation component 115 and the second insulation component 116 can provide insulation between the first housing 111 and the negative post 113. The first insulation component 115 and the second insulation component 116 each have a hollow ring shape, which is in contact with the wall of the post hole 1121 and provides isolation between the negative post 113 and the first housing 111. The first insulation component 115 and the second insulation component 116 may also be in contact with the surface where the wall of the post hole 1121 joins with the first housing 111 to ensure the insulation effect between the negative post 113 and the first housing 111. Both the first insulation component 115 and the second insulation component 116 may be made of plastic material.

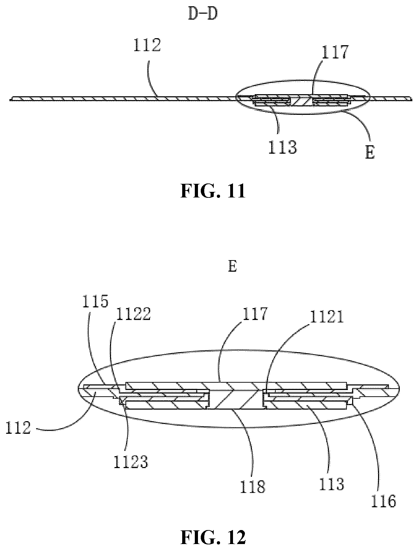

As shown in FIG. 12, the post hole 1121 has a first stepped surface 1122 and a second stepped surface 1123 on both sides. The first insulation component 115 is in contact with the first stepped surface 1122, and the second insulation component 116 is in contact with the second stepped surface 1123. The stepped surfaces may be used to limit the positions of the insulation components.

At S103, the negative post 113 is arranged to abut on the second insulation component 116.

After arranging the insulation components, the negative post 113 may be arranged. The negative post 113 is arranged on a side of the second housing 112 away from the accommodating cavity 101, and the position of the negative post 113 is limited by the second insulation component 116.

At S104, a position-limiting component 117 is provided on the first insulation component 115, a riveting component 118 passing through the negative post 113 and the post hole 1121 is provided, and the riveting component 118 is welded with the position-limiting component 117.

The riveting component 118 may be connected to the position-limiting component 117 to form a whole. The position-limiting component 117 is fixed on the inner surface of the second housing 112 facing the accommodating cavity 101, and the riveting component 118 fixes the negative post 113 using a boss structure at the end. The negative post 113, the riveting component 118, and the position-limiting component 117 form a conductive whole, thereby mounting the negative post 113 on the second housing 112.

After the operation S120, the method may further include the operations as follows.

At S121, a first insulation film 13 including a first extension portion 132, a second extension portion 133, and a main body 131 is provided.

The first insulation film 13 is the part that wraps around the bare cell 12, which can effectively seal and protect the bare cell and isolate the bare cell from the housing 11. The first insulation film 13 is arranged on the outside of the bare cell 12. The main body 131 is the part that wraps around the bare cell and covers four lateral surfaces of the bare cell, and the first extension portion 132 and the second extension portion 133 are the parts that wrap the two end surfaces of the bare cell. The first extension portion 132 and the second extension portion 133 are formed by extending the edges of the main body 131 opposite to each other in directions far away from each other. With the cooperation of different parts, the bare cell 12 can be effectively wrapped. In practice, the first insulation film 13 may be made of polyester film, such as Mylar film.

At S122, the second extension portion 133 is folded to cover a fourth surface of the bare cell 12 opposite to the third surface with the second extension portion 133.

The second extension portion 133 has an area larger than an area of the fourth surface of the bare cell. Thus, the fourth surface of the bare cell can be covered by the second extension portion 133.

At S123, the first extension portion 132 is folded to cover the third surface of the bare cell 12 with the first extension portion 132.

The first extension portion 132 has an area larger than an area of the third surface of the bare cell. Thus, the third surface of the bare cell can be covered by the first extension portion 132.

At S124, covering remaining surfaces of the bare cell 12 using the main body 131 and exposing the portion of the positive tab 121.

The main body 131 covers the four lateral surfaces of the bare cell and thus covers the two lateral surfaces of the bare cell having relatively large area. Furthermore, the portion of the positive tab 121 is exposed through the clearance reserved on the main body 131.

At S125, on the second surface, a portion of the second extension portion 133 is welded with the main body 131; on the second surface, a portion of the first extension portion 132 is welded with the main body 131, and the portion of the negative tab 122 is exposed.

By welding the portion of the first extension portion 132 overlapped with the main body 131 to the main body 131 and welding the portion of the second extension portion 133 overlapped with the main body 131 to the main body 131, portions of the first insulation film 13 may be connected to form a whole, thereby wrapping the bare cell inside and exposing portions of the positive tab 121 and of the negative tab 122. After the positive tab 121 passes through the clearance defined on the first insulation film 13, portions of the first insulation film 13 are sequentially folded, and the overlapping areas of the folded first insulation film 13 are melting welded to form a whole. The portions of the positive tab 121 and of the negative tab 122 corresponding to the lateral surfaces of the bare cell are located on the sides of the first insulation film 13 away from the bare cell, respectively.

In practice, after the bare cell is fully wrapped by the Mylar film, the positive tab 121 may be welded to the inner surface of the bottom wall 1111 of the first housing 111 facing the accommodating cavity 101. That is, after the operation S130, the method may further include the operations as follows.

At S131, the positive tab 121 is welded, using friction welding or laser welding, with the bottom wall 1111 on a side of the bottom wall 1111 away from the accommodating cavity 101.

After the bare cell is fully wrapped by the Mylar film, the negative tab 122 may be connected to the negative post 113 on the second housing 112. That is, after the operation S130, the method may further include the operations as follows.

At S132, the second housing 112 is disposed on the first housing 111.

The second housing 112 is disposed along a direction parallel to the side walls 1112. In this case, the disposing direction of the second housing 112 is parallel to the top surface of the bare cell, close to the leading-out surface of the negative tab 122.

At S133, the negative tab 122 is arranged to in contact with the negative post 113 on the second housing 112.

After disposing the second housing 112, the negative tab 122 may be kept straight, that is, the portion of the negative tab 122 corresponding to the lateral surface of the bare cell is away from the lateral surface of the bare cell, so that the negative tab 122 is in contact with the negative post 113 of the second housing 112. When the negative post 113 is mounted to the riveting component 118 via the position-limiting component 117, the negative tab 122 is in contact with the position-limiting component 117 that forms a whole with the negative post 113.

At S134, the negative tab 122 is welded with the negative post 113.

When the negative tab 122 is straight and comes into contact with the negative post 113 of the second housing 112, there is enough space to weld the negative tab 122 with the negative post 113, thereby achieving the connection between the negative tab 122 and the negative post 113. When the negative post 113 is mounted to the riveting component 118 via the position-limiting component 117, the negative tab 122 is welded to the position-limiting component 117 to form a conductive path between the negative tab 122 and the negative post 113.

After the operation S130, the method may further include the operations as follows.

At S135, a plastic component 15 is disposed in the accommodating cavity 101 in a way that the plastic component 15 is in contact with the first housing 111 and with the bare cell 12.

After inserting the plastic component 15 into the accommodating cavity 101, the plastic component 15 will press the bare cell on its top surface. With the plastic component 15, the position of the bare cell within the accommodating cavity 101 can be effectively fixed, and undesired movement of the bare cell 12 inside the accommodating cavity 101 can be prevented.

Some embodiments of the present disclosure provide an energy storage system including a cabinet having an inner cavity and bare cells arranged in the inner cavity. Each of the bare cells includes a respective plurality of secondary batteries as illustrated above.

The energy storage system may adopt cabin-level energy storage, cluster-level energy storage, and pack-level energy storage depending on application scenarios. The secondary battery 10, i.e. individual battery may be connected in series or in parallel to form a battery module. The battery module is packaged in a certain form to form a whole. The energy storage system may include one or more battery modules, and a certain number of battery modules may form a battery cluster for unified management and control. A plurality of battery modules may be packaged in a cabin of a certain volume to form a battery pack, or packaged in a larger container to form a container energy storage system. A plurality of battery modules may be jointly managed and controlled by a battery management system and a thermal management system.

By simplifying the structure of the secondary battery 10, adverse effect on working performance of the secondary battery 10 due to complex manufacturing processes can be reduced. Moreover, the arrangement space inside the packaging housing 11 can be effectively utilized, and the capacity of the secondary battery can be increased, thereby improving working performance of the secondary battery 10 and ensuring the performance of the energy storage system.

Some embodiments of the present disclosure provide a power utilization apparatus including the energy storage system as illustrated above.

The power utilization apparatus may function as the energy source for daily consumer goods, industrial products, or other electrical devices equipped with electrochemical energy storage systems.

Those skilled in the art shall understand that the above-mentioned embodiments are specific examples for implementing the present disclosure. In practice, various changes may be made in form and details without departing from the scope of the present disclosure.

## Claims

1. A secondary battery (10), **characterized by** comprising:
a housing (11) including a first housing (111) and a second housing (112) configured to connect to the first housing (111), wherein the first housing (111) forms an accommodating cavity (101) and has an opening (102) communicated with the accommodating cavity (101), and the second housing (112) is configured to seal the opening (102), and wherein the first housing (111) includes a bottom wall (1111) and side walls (1112) connected to the bottom wall (1111) and connected to one another to form the accommodating cavity (101), a surface of the bottom wall (1111) facing the accommodating cavity (101) has a surface area larger than a surface area of a surface of one respective side wall of the side walls (1112) facing the accommodating cavity (101), and the second housing (112) is provided with a negative post (113) that is insulated from the second housing (112); and
a bare cell (12) arranged in the accommodating cavity (101) and including a positive pole piece, a negative pole piece, and a diaphragm configured to insulate the positive pole piece from the negative pole piece, wherein the positive pole piece is provided with a positive tab (121), and the negative pole piece is provided with a negative tab (122), and wherein the bare cell (12) includes a first surface (123) facing the bottom wall (1111), a second surface (124) opposite to the first surface (123) and facing the second housing (112), and a third surface (125) connecting the first surface (123) to the second surface (124), the positive tab (121) extends from the third surface (125) and is bent to allow a portion of the positive tab (121) to extend along the first surface (123), and the negative tab (122) extends from the third surface (125) and is bent to allow a portion of the negative tab (122) to extend along the second surface (124);
wherein the portion of the positive tab (121) extending along the first surface (123) is in electrical connection to the bottom wall (1111), and the portion of the negative tab (122) extending along the second surface (124) is in electrical connection to the negative post (113).

2. The secondary battery (10) according to claim 1, further including a first insulation film (13), wherein the first insulation film (13) includes a first extension portion (132) configured to cover the third surface (125), a second extension portion (133) configured to cover a fourth surface opposite to the third surface (125), and a main body (131) configured to cover remaining surfaces of the bare cell (12).

3. The secondary battery (10) according to claim 2, wherein the first extension portion (132) includes a first border area (1321) and a second border area (1322) opposite to the first border area (1321), the first extension portion (132) is connected to the main body (131) at the first border area (1321), a first hollow area (134) configured for the positive tab (121) to pass through is defined in the first border area (1321), and a second hollow area (135) configured for the negative tab (122) to pass through is defined in the second border area (1322); and
wherein a portion of the second border area (1322) is bent to cover and be fixed on a side of the main body (131) away from the second surface (124), and a portion of a border area of the second extension portion (133) is bent to cover and be fixed on the side of the main body (131) away from the second surface (124).

4. The secondary battery (10) according to any one of claims of 1 to 3, further including a second insulation film (14) configured to wrap the housing (11) inside, wherein a first through hole (141) facing the bottom wall (1111) and a second through hole (142) facing the second housing (112) are defined on the second insulation film (14), a portion of the bottom wall (1111) is exposed from the first through hole (141), and the negative post (113) is exposed from the second through hole (142).

5. The secondary battery (10) according to claim 4, wherein the negative post (113) is arranged adjacent to an edge of the second housing (112), and the first through hole (141) is coaxial with the second through hole (142).

6. The secondary battery (10) according to claim 4 or claim 5, wherein a side wall of the side walls (1112) is provided with an explosion-proof valve (114), a third through hole (143) facing the explosion-proof valve (114) is defined on the second insulation film (14), and the explosion-proof valve (114) is exposed from the third through hole (143).

7. The secondary battery (10) according to any one of claims of 1 to 6, further including a plastic component (15) arranged in the accommodating cavity (101), wherein the plastic component (15) includes a first contact surface (151) configured to contact with the housing (11) and a second contact surface (152) opposite to the first contact surface (151) and configured to contact with the bare cell (12).

8. A method for manufacturing secondary batteries, **characterized by** comprising:
providing (S110) a housing (11) including a first housing (111) and a second housing (112) configured to connect to the first housing (111), wherein the first housing (111) forms an accommodating cavity (101) and has an opening (102) communicated with the accommodating cavity (101), the first housing (111) includes a bottom wall (1111) and side walls (1112) connected to the bottom wall (1111) and connected to one another to form the accommodating cavity (101), a surface of the bottom wall (1111) facing the accommodating cavity (101) has a surface area larger than a surface area of a surface of one respective side wall of the side walls (1112) facing the accommodating cavity (101), and the second housing (112) is provided with a negative post (113) that is insulated from the second housing (112);
manufacturing (S120) a bare cell (12) including a first surface (123) facing the bottom wall (1111), a second surface (124) opposite to the first surface (123) and facing the second housing (112), and a third surface (125) connecting the first surface (123) to the second surface (124), including:
bending a positive tab (121) provided on the third surface (125) to allow a portion of the positive tab (121) to extend along the first surface (123); and
bending a negative tab (122) provided on the third surface (125) to allow a portion of the negative tab (122) to extend along the second surface (124);
arranging (S130) the bare cell (12) in the accommodating cavity (101), wherein the portion of the positive tab (121) extending along the first surface (123) is in electrical connection to the bottom wall (1111), and the portion of the negative tab (122) extending along the second surface (124) is in electrical connection to the negative post (113); and
engaging (S140) the second housing (112) with the first housing (111) to seal the opening (102) with the second housing (112).

9. The method according to claim 8, before providing (S110) the housing (11), further including:
defining (S101) a post hole (1121) on the second housing (112);
providing (S102) a first insulation component and a second insulation component on both sides of the post hole (1121), respectively;
arranging (S103) the negative post (113) to abut on the second insulation component; and
providing (S104) a position-limiting component on the first insulation component, providing a riveting component passing through the negative post (113) and the post hole (1121), and welding the riveting component with the position-limiting component.

10. The method according to claim 8 or claim 9, after manufacturing (S120) the bare cell (12), further including:
providing (S121) a first insulation film (13) including a first extension portion (132), a second extension portion (133), and a main body (131);
folding (S122) the second extension portion (133) to cover a fourth surface of the bare cell (12) opposite to the third surface (125) with the second extension portion (133);
folding (S123) the first extension portion (132) to cover the third surface (125) with the first extension portion (132);
covering (S124) remaining surfaces of the bare cell (12) using the main body (131) and exposing the portion of the positive tab (121); and
welding (S125), on the second surface (124), a portion of the second extension portion (133) with the main body (131), welding (S125), on the second surface (124), a portion of the first extension portion (132) with the main body (131), and exposing (S125) the portion of the negative tab (122).

11. The method according to any one of claims 8 to 10, after arranging (S130) the bare cell (12) in the accommodating cavity (101), further including:
welding (S131), using friction welding or laser welding, the positive tab (121) with the bottom wall (1111) on a side of the bottom wall (1111) away from the accommodating cavity (101).

12. The method according to any one of claims 8 to 11, after arranging (S130) the bare cell (12) in the accommodating cavity (101), further including:
disposing (S132) the second housing (112) on the first housing (111);
arranging (S133) the negative tab (122) to in contact with the negative post (113) on the second housing (112); and
welding (S134) the negative tab (122) with the negative post (113).

13. The method according to any one of claims 8 to 12, after arranging (S110) the bare cell (12) in the accommodating cavity (101), further including:
disposing (S135) a plastic component (15) in the accommodating cavity (101) in a way that the plastic component (15) is in contact with the first housing (111) and with the bare cell (12).

14. An energy storage system, including:
a cabinet having an inner cavity; and
bare cells (12) arranged in the inner cavity;
wherein each bare cell of the bare cells (12) includes a respective plurality of secondary batteries (10) according to any one of claims of 1 to 7.

15. A power utilization apparatus, including the energy storage system according to claim 14.
